# EUROPEAN PATENT APPLICATION

(11) **EP 2 943 037 A1**
(43) Date of publication of application: **11.11.2015**
(21) Application number: 14305680.2
(22) Date of filing: 09.05.2014
(51) Int. Cl.: H04W 76/04, H04L 5/00, H04W 74/08

(54) **Method for managing access to an access node, device, network, node and computer program product**

(71) Applicant: ALCATEL LUCENT, 92100 Boulogne-Billancourt (FR)
(72) Inventor: Palat, Sudeep, Swindon, Wiltshire SN5 7DJ (GB); Wong, Shin Horng, Swindon, Wiltshire SN5 7DJ (GB); Lim, Seau Sian, Swindon, Wiltshire SN5 7DJ (GB); Baker, Matthew, Swindon, Wiltshire SN5 7DJ (GB)
(74) Representative: Greenwood, Matthew David

(57) **Abstract**

A method for managing access of a category of devices to an access node of a wireless communications network, comprising, at a device of the said category, receiving a parameter indicating of the size of a group of random access preambles which said category of device is constrained to use, and determining whether access to the node is permitted for the device on the basis of the indicated size of the group.

## Description

### TECHNICAL FIELD

The field of the invention relates, in general, to the allocation of communication resources and more particularly, although not exclusively, to the allocation of preambles in a wireless network.

### BACKGROUND

Wireless telecommunication networks enable communication with user equipment (UE) devices such as mobile telephones for example. A base station or node of the network will broadcast details of the network and of how to connect to it to UEs within range. A device can then signal to the base station that it wishes to connect to the network using one of a predetermined number of preambles, which are specific patterns or signatures used by the network node to differentiate between requests coming from respective different devices.

Such networks are also increasingly being used by other UE devices for the transmission of other information. One such type of UE device is a machine type communication (MTC) device that can be used for the communication of information from machines, such as smart utility meters for example. An MTC device may be static or mobile, and will typically have different requirements to UE devices that utilise a network for voice and data communications. An MTC device can be a low cost/complexity MTC (LC-MTC) with limited capability. For example, an LC-MTC device may have one receive antenna, and may limit the transport block size (TBS) for uplink and downlink to 1000bits. Accordingly, as these UEs cannot be scheduled with high TBS, even with good radio conditions, their presence in a cell can reduce overall network performance.

Due to the 1000 TBS limitation, an eNodeB (eNB) scheduler needs to be aware that a UE is an LC-MTC UE and this presupposes an eNB that can recognize and handle such UEs. This reduces the number of networks in which LC-MTC UEs can be deployed, which in turn reduces time to market and may make it difficult to achieve economy of scale. If, in certain instances, the number of LC MTC UEs deployed or to be deployed in a network is not significant, this may reduce any incentive for network vendors to implement an eNB that supports such LC-MTC UEs.

Furthermore, there is a migration issue in which eNBs may only be upgraded area by area. This means that LC-MTC UEs can only be used in areas where the eNB has been upgraded to support such devices, and means that the devices are not supported in the areas where eNB has not yet been upgraded.

Typically, radio resource control (RRC) signaling can be modified in order to control access of LC-MTE UEs to a network. For example, in periods of high activity or when the network is overloaded, communications to and from LC-MTC UEs can be stalled, which is typically not an issue as the very nature of the devices implies that they are, to an extent, delay tolerant. Accordingly, LC-MTC devices can be barred from accessing a network node and therefore using network resource during periods of high network load. In this connection, the access node is able to differentiate between an LC-MTE and other UE in order to enable the LC-MTC UE sub-group to be selectively barred by modifying signalling.

However, a legacy node, such as a network access node that does not recognize LC-MTC UEs, cannot modify signaling and cannot differentiate between LC-MTC UE and other UE devices. The presence of LC-MTC devices in such a legacy network or cell can therefore reduce overall system performance.

### SUMMARY

According to an example, there is provided a method for managing access of a category of devices to an access node of a wireless communications network, comprising at a device of the said category, receiving a parameter indicating of the size of a group of random access preambles which said category of device is constrained to use, and determining whether access to the node is permitted for the device on the basis of the indicated size of the group. Modifying the group of random access preambles at the node can be performed by adjusting a group parameter representing the size of the group to a predetermined value whereby to bar access to the node by the device. The predetermined value can be selected such that there is one preamble in the group. The group of random access preambles can be constrained by the node in response to an increase in network load, whereby to limit access by devices of the said category to the network.

In an example, modifying the group of random access preambles at the node can be performed by adjusting a group parameter, sizeOfRaPreamblesGroupA, which represents the number of preambles available within a random access preamble Group A whereby to bar access to the node by the device. For example, the device can be constrained to use only preambles from random access preamble Group A, and upon receipt a group parameter indicating the size of the Group of preambles, sizeOfRaPreamblesGroupA, can determine whether access to the node is permitted on the basis of the indicated size of the group. The sizeOfRaPreamblesGroupA parameter indicating the size of the group of random access preambles can be constrained by the node in response to an increase in network load. As such, access by devices of the said category to the network can be limited.

In an example, the predetermined value is selected such that there is one preamble in the group, that is, so that sizeOfRaPreamblesGroupA = 1. Reception by the device of a parameter indicating that the size of the group of random access preambles is 1 indicates to the device that access to the node is barred.

According to an example, there is provided a method for managing access of a category of devices to an access node of a wireless communications network, comprising, at a device of the said category: receiving a parameter indicating of the size of a group of random access preambles which said category of device is constrained to use; determining whether access to the node is permitted for the device on the basis of the indicated size of the group; wherein the group of random access preambles is modified at the node by adjusting a group parameter representing the size of the group to a predetermined value whereby to bar access to the node by the device. The predetermined value can be one.

According to an example, there is provided a device of a category constrained to use a selected group of random access preambles received from a node of a wireless telecommunications network, wherein the device is operable to receive a parameter indicating of the size of the group of random access preambles and to determine whether access to the node is permitted on the basis of the indicated size of the group. The device can be operable to disregard group selection criteria representing a procedure for allocating a preamble from multiple groups of preambles of the network. The device can be operable, upon receipt of predefined preamble data of the group, not to access the network in the event that only one preamble is provided. In an example, the device is an MTC UE, and more particularly an LC-MTC UE.

According to an example, there is provided a wireless telecommunications network including a node operable to modify a group of preambles for receipt by devices of a certain category within coverage range of the node to constrain the group to a predetermined number of preambles, whereby to indicate to the devices of said category that access to the node is barred to those devices. The node can be operable to constrain the group of random access preambles by adjusting a group parameter representing the size of the group to a predetermined value. The node can be operable to constrain the group of random access preambles to include one preamble. The node can be operable to modify a parameter of multiple ones of groups of preambles whereby to enable a group to be used exclusively or non-exclusively by devices of the said category.

According to an example, there is provided a node in a wireless telecommunications network, the node operable to modify a group of preambles for receipt by devices of a certain category within coverage range of the node to constrain the group to a predetermined number of preambles, whereby to indicate to the devices of the said category that access to the node is barred to those devices. The node can be operable to constrain the group of random access preambles by adjusting a group parameter representing the size of the group to a predetermined value. The node can be operable to modify a parameter of multiple ones of groups of preambles whereby to enable a group to be used exclusively or non-exclusively by devices of the said category.

According to an example, there is provided a computer program product, comprising a computer usable medium having computer readable program code embodied therein, said computer readable program code adapted to be executed to implement a method for managing access of devices of the said category as provided herein.

### BRIEF DESCRIPTION OF THE DRAWINGS

Embodiments will now be described, by way of example only, with reference to the accompanying drawings, in which:
Figure 1 is a schematic representation of a wireless communication network according to an example; and
Figure 2 is a schematic representation of a message flow between an LC-MTC UE and an access node in the form of an eNB according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

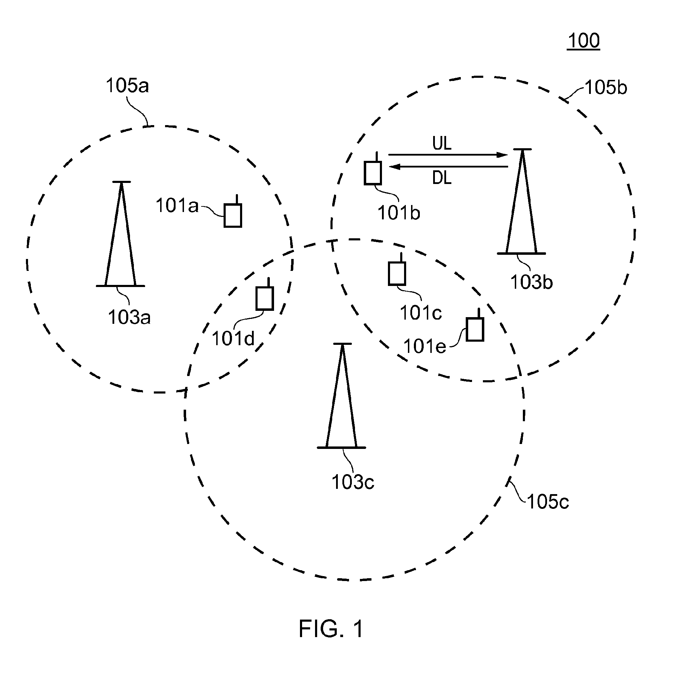

Figure 1 is a schematic representation of a wireless communication network according to an example. The network 100 incorporates a number of mobile UEs 101a-e and a number of NodeBs 103a-c, respectively serving an area known as a cell (105a-c) in which UE devices within range can be served by the node in question. There are multiple categories of UE/device, each of which defines the different characteristics of the devices in question, such as data rate and so on. The use of the categories enables different levels of performance to be implemented for different devices. Characteristics of a UE can be communicated to the network which can then communicate with the UE in a suitable manner. Accordingly, the category of UE device matches its performance and allows an access node of a network to communicate effectively with all the UEs that are connected to it.

A NodeB is generally a fixed station, and may also be called a base transceiver system (BTS), an access point (AP) or node, a base station (BS), or some other equivalent terminology. In general, NodeB hardware, when deployed, is fixed and stationary, while the UE hardware is portable. In contrast to NodeB, the mobile UE can be portable hardware. User equipment (UE), also commonly referred to as a terminal or a mobile station, may be a fixed or mobile device and may be a wireless device, a cellular phone, a personal digital assistant (PDA), a wireless modem card, and so on. Uplink communication (UL) refers to a communication from the mobile UE to the NodeB, such as UL from UE 101b to node 103b, whereas downlink (DL) refers to communication from the NodeB to the mobile UE, such as DL from UE 101b to node 103b. Each NodeB contains radio frequency transmitter(s) and the receiver(s) used to communicate directly with the mobiles, which move freely around it. Similarly, each mobile UE contains radio frequency transmitter(s) and the receiver(s) used to communicate directly with the NodeB.

Long Term Evolution (LTE) wireless networks, also known as Evolved Universal Terrestrial Radio Access (E-UTRA), are being standardized by the 3GPP working groups (WG). OFDMA and SC-FDMA (single carrier FDMA) access schemes were chosen for the down-link (DL) and up-link (UL) of E-UTRA, respectively. UEs are time and frequency multiplexed on a physical uplink shared channel (PUSCH), and a fine time and frequency synchronization between UEs guarantees optimal intra-cell orthogonality. In case the UE is not UL synchronized, it uses a non-synchronized Physical Random Access Channel (PRACH), and the Base Station provides back some allocated UL resource and timing advance information to allow the UE to transmit on the PUSCH. As improvements of networks are made, the NodeB functionality evolves; a NodeB in the EUTRA environment is also referred to as an evolved NodeB (eNB). Any one or more of nodes 103a-c can be an eNB.

Random access transmission denotes a transmission by the mobile terminal, of at least one signal, from a plurality of pre-defined signals. The plurality of pre-defined signals is specified by the random access structure.

The random access signal is based on a preamble based physical structure of the PRACH. A number of available preambles are provided that can be used concurrently to minimize the collision probability between UEs accessing the PRACH in a contention-based manner. The signatures for random access preambles are partitioned into two configurable-size groups, enabling carrying 1-bit of information on the preamble. This information indicates to the eNB the preferred size of the first post-preamble PUSCH transmission, chosen by the UE from among two possible sizes based on the amount of data available for transmission and the radio conditions.

Thus, typically, in order for a UE to access a wireless communications network such as 100, a random access procedure can be used. In such a random access procedure an access node 103a-c will broadcast to UE within range details of the network and of how to connect to it. As noted, a UE device can signal to the base station that it wishes to connect to the network using one of a predetermined number of preambles.

Typically, there are total of 64 preambles available which are divided into two groups; Group A and Group B. Typically, UE decides the preamble index from a group on the basis of parameters received in a system information block (SIB2) message:-
numberofRaPreambles :- eNodeB sends this value in SIB2 which denotes the total
number of preambles available for UE to send a RACH Request.
sizeOfRaPreamblesGroupA :- represents the number of preambles available within Group A.

Accordingly, the number of preamble in Group B = numberofRaPreambles - sizeOfRaPreamblesGroupA

MessageSizeGroupA :- is used for selecting a preamble from a group.

Thus, in the existing preamble allocation, there are two preamble groups. The preambles that are contained in Random Access Preambles group A and Random Access Preambles group B, and these are calculated from the parameters numberOfRA-Preambles and sizeOfRA-PreamblesGroupA.

If sizeOfRA-PreamblesGroupA is equal to numberOfRA-Preambles then there are no Random Access Preamblesgroup B. The preambles in Random Access Preamble group A are the preambles 0 to sizeOfRAPreamblesGroupA - 1 and, if it exists, the preambles in Random Access Preamble group B are the preambles sizeOfRA-PreamblesGroupA to numberOfRA-Preambles - 1 from the set of 64 preambles.

If Random Access Preambles group B exists, the thresholds,
messagePowerOffsetGroupB and messageSizeGroupA, the configured UE transmitted power of the Serving Cell performing the Random Access Procedure, PCMAXc , and the offset between the preamble and Msg3, deltaPreambleMsg3, and the UE selects a group based on the following criteria:

If Random Access Preambles group B exists and if the potential message size (data available for transmission plus MAC header and, where required, MAC control elements) is greater than messageSizeGroupA and if the pathloss is less than PCMAX,c (of the Serving Cell performing the Random Access Procedure)-preambleInitialReceivedTargetPower - deltaPreambleMsg3-messagePowerOffsetGroupB, then UE selects the Random Access Preambles group B. Otherwise, random access preambles group A is selected.

According to an example, a device of a certain category, such as an MTC or LC-MTC UE device for example, is constrained so as to only use only one Random Access Preamble Group, such as Group A. This is done by forcing or constraining the device to always use Group A disregarding the above group selection criteria. Hereinafter, reference is made to an MTC UE, and more particularly, an LC-MTC UE/device, which is a category of UE device operable within a network according to an example. However, it should be noted that reference herein to a particular category of device, such as an LC-MTC UE device for example, is not intended to be limiting, but is provided for the sake of clarity of description. Other categories of devices can be used, and examples as described herein are applicable to multiple such categories of devices that can operate within a wireless communications network as described. Accordingly, use of the term LC-MTC UE/device is not intended to be limiting and can more generally be considered as UE. The use of LC-MTC is provided as one example of an advantageous implementation of the present mechanism.

An LC-MTC UE can be constrained by modifying rules embodied in hardware or software/firmware of the device to constrain the device to use only Group A preambles. Such a modification can be performed after manufacture by way of an update to the device, such as a firmware update for example.

If there is no Group A or Group A is limited to a special preamble, this mechanism can therefore be extended to bar LC-MTC UE from initiating network access. In an example, this is enabled by setting sizeOfRAPreamblesGroupA to 1 and can therefore be used as a means of access control to prevent access to the network by LC-MTC UE and can be used on top of the access control designed for delay tolerant UE (Extended Access Class Barring).

The solution is to use the size of Group A for access control of LC MTC UE by adjusting the sizeOfRA-PreamblesGroupA such that there is only Preamble 0. When only Preamble 0 is in Group A, LC MTC UE considers access to the cell as barred.

By forcing LC MTC UE to use only the Group A preamble(s), the mechanism can be used to create a Group A preamble for exclusive or non-exclusive use by LC-MTC UE without the need to create a new group for LC MTC UE (i.e. no additional signaling for such group).

For example, the Random Access Preambles group B can be made to be used by all the legacy or non-LC MTC UEs by setting the messagePowerOffsetGroupB (and messageSizeGroupA) appropriately such that even the cell edge legacy or non-LC MTC UE will choose Random Access Preambles group B rather than group A (i.e. Group A preambles are made exclusive to LC MTC UE). It can also adjust the messagePowerOffsetGroupB in such a way as to allow some legacy or non-LC MTC UE to use group A (i.e. Group A is made non-exclusive to LC MTC UE as some non-LC MTC UE (e.g. at the cell edge) can use Group A preambles) in the case where there are low number of LC-MTC UE.

Hence the solution reuses the existing preamble split (Group A and B) in order to indicate the need of extended message 3 size to create a preamble group exclusively or non-exclusively used by LC-MTC UE by adjusting the messagePowerOffsetGroupB (and messageSizeGroupA) to allow Group A to be exclusively or non-exclusively used by LC-MTC UE.

According to an example, existing RRC signalling is modified in order to enable LC-MTC UEs to be constrained from accessing a node of a network. That is, a group of preambles, such as Group A for example, which can be provided as part of a SIB2 message, can be modified in the event that LC-MTC UEs are to be barred from network access by constraining the group to only one preamble, such as Preamble 0 for example. LC-MTC UEs can be constrained to use only Group A preambles for example, and so, upon reception of the group, can determine whether or not they can access the network. For example, upon reception of a modified group in which only one preamble is provided, the LC-MTC UEs can determine that they are barred from network access. Accordingly, LC MTC UEs use a single preamble group, such as group A. If the preamble group has size of 1, then the LC MTC UEs consider access to the cell as barred or not allowed. Modification of existing signalling enables the selection of LC-MTC UE access by legacy networks, thereby enabling them to control the access of LC-MTC UEs.

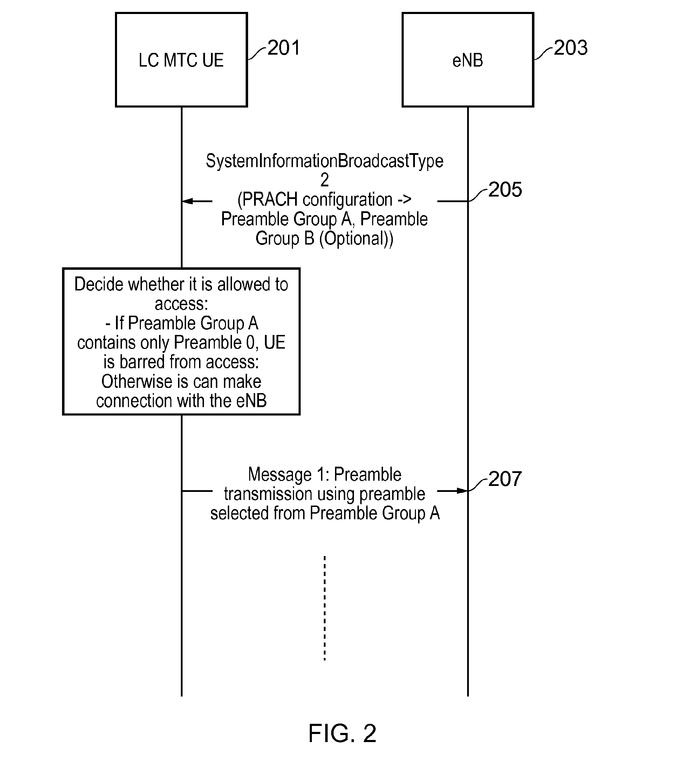

Figure 2 is a schematic representation of a message flow between an LC-MTC UE and an access node in the form of an eNB according to an example. As noted above, the LC-MTC UE 201 can communicate with an access node 203, such as an eNB, of a wireless communication network 100. Access node 203 broadcasts PRACH configuration data 205 in a SIB2 broadcast message, which includes data relating to a preamble group A and optionally a preamble group B. The LC-MTC UE 201 receives and decodes the broadcast, and determines whether it can access the node 203 for the use of network services. More specifically, if the preamble group A only contains one preamble, such as preamble 0 for example, the LC-MTC UE 201 is barred from accessing the node 203 and cannot therefore utilise network services. Otherwise, the LC-MTC UE 201 can connect with the node 203, in which case a message 207 is transmitted by LC-MTC UE 201 to node 203 in which a preamble transmission using a preamble selected from group A is used.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for managing access of a category of devices to an access node of a wireless communications network, comprising:
at a device of the said category, receiving a parameter indicating of the size of a group of random access preambles which said category of device is constrained to use, and
determining whether access to the node is permitted for the device on the basis of the indicated size of the group.

2. A method as claimed in claim 1, further including:
modifying the group of random access preambles at the node by adjusting a group parameter representing the size of the group to a predetermined value whereby to bar access to the node by the device.

3. A method as claimed in claim 2, wherein the predetermined value is selected such that there is one preamble in the group.

4. A method as claimed in any preceding claim, wherein the group of random access preambles is constrained by the node in response to an increase in network load, whereby to limit access by devices of the said category to the network.

5. A device of a category constrained to use a selected group of random access preambles received from a node of a wireless telecommunications network, wherein the device is operable to receive a parameter indicating of the size of the group of random access preambles and to determine whether access to the node is permitted on the basis of the indicated size of the group.

6. A device as claimed in claim 5, wherein the device is operable to disregard group selection criteria representing a procedure for allocating a preamble from multiple groups of preambles of the network.

7. A device as claimed in claim 5 or 6, wherein the device is operable, upon receipt of predefined preamble data of the group, not to access the network in the event that only one preamble is provided.

8. A wireless telecommunications network including a node operable to modify a group of preambles for receipt by devices of a certain category within coverage range of the node to constrain the group to a predetermined number of preambles, whereby to indicate to the devices of said category that access to the node is barred to those devices.

9. A wireless telecommunications network as claimed in claim 8, wherein the node is operable to constrain the group of random access preambles by adjusting a group parameter representing the size of the group to a predetermined value.

10. A wireless telecommunications network as claimed in claim 8 or 9, wherein the node is operable to constrain the group of random access preambles to include one preamble.

11. A wireless telecommunications network as claimed in any of claims 8 to 10, wherein the node is operable to modify a parameter of multiple ones of groups of preambles whereby to enable a group to be used exclusively or non-exclusively by devices of the said category.

12. A node in a wireless telecommunications network, the node operable to modify a group of preambles for receipt by devices of a certain category within coverage range of the node to constrain the group to a predetermined number of preambles, whereby to indicate to the devices of the said category that access to the node is barred to those devices.

13. A node as claimed in claim 12, wherein the node is operable to constrain the group of random access preambles by adjusting a group parameter representing the size of the group to a predetermined value.

14. A node as claimed in claims 12 or 13, wherein the node is operable to modify a parameter of multiple ones of groups of preambles whereby to enable a group to be used exclusively or non-exclusively by devices of the said category.

15. A computer program product, comprising a computer usable medium having computer readable program code embodied therein, said computer readable program code adapted to be executed to implement a method for managing access of devices of the said category as claimed in any of claims 1 to 4.
